# EUROPEAN PATENT SPECIFICATION

(11) **EP 2 033 881 B1**
(45) Date of publication and mention of the grant of the patent: **01.09.2010**
(21) Application number: 08159706.4
(22) Date of filing: 04.07.2008
(51) Int. Cl.: B62J 3/00, B62K 21/12

(54) **Bicycle handlebar, assembly of such bicycle handlebar and a bicycle bell, bicycle provided with such bicycle handlebar, and method for manufacturing such bicycle handlebar**
Fahrradlenker, Zusammenbau von einem derartigen Fahrradlenker und einer Fahrradklingel, Fahrrad mit einem derartigen Fahrradlenker, und Verfahren zur Herstellung eines derartigen Fahrradlenkers
Guidon, composition d'un tel guidon et une sonnette de bicyclette, bicyclette avec un tel guidon, et procédé pour fabrication d'un tel guidon.

(30) Priority: 05.07.2007 NL 1034100
(43) Date of publication of application: 11.03.2009
(73) Proprietor: Batavus B.V., 8444 AR Heerenveen (NL)
(72) Inventor: Zandstra, Jurjen, 8412 SN Hoornsterzwaag (NL)
(74) Representative: Hatzmann, Martin

(56) References cited:
- DE-A1- 2 727 951
- DE-C- 804 760
- DE-U1- 8 803 735
- FR-A- 1 109 220
- GB-A- 2 391 204

## Description

The invention relates to a bicycle handlebar comprising a substantially tube-shaped or rod-shaped handlebar bend which, in longitudinal direction, may or may not proceed to a greater or lesser extent in a curved manner. The invention further relates to an assembly of such a bicycle handlebar and a bicycle bell cooperating therewith, on a bicycle provided with such a bicycle handlebar, and to a method for manufacturing such a bicycle handlebar.

With such a bicycle handlebar, it is known to fasten a bicycle bell to the handlebar bend with the aid of a clamping ring which is clamped around a tubular section of the handlebar bend by means of one or more bell such as in closest prior art document DE 8803735 U, has a

The known assembly of bicycle handlebar and bicycle bell such as in closest prior art document DE 8803735 U has a number of drawbacks. For instance, a bicycle bell fastened to the handlebar bend is not very well protected against impacts and the bicycle bell is susceptible to external objects catching thereon, such as, for instance, clothing, bags and the like. As a result, the bicycle bell can become damaged, it can twist or become dislodged. The bicycle bell can also twist or become dislodged due to vibrations occurring during cycling. Further, a thus fastened bicycle bell is susceptible to theft.

It is an object of the invention to provide a solution according to which, with an assembly of a bicycle handlebar and a bicycle bell, the bicycle bell is protected better against damage and dislocation.

To this end, according to the invention, a bicycle handlebar according to claim 1 is provided.

As the bicycle bell receiving space is limited by the bicycle bell receiving element and by parts of the tube-shape or rod-shape of the bicycle handlebar bend which adjoin the location where the tube-shape or rod-shape is interrupted by the bicycle bell receiving space, a bicycle bell received in the bicycle bell receiving element is screened off from the outside world, on the one side by the bicycle bell receiving element and on the other side by the parts of the tube-shape or rod-shape of the handlebar bend. This screening effect protects the bicycle bell from damage and dislocation.

As a bicycle bell cooperating with the bicycle handlebar can be at least partly received in the bicycle bell receiving space which interrupts the tube-shape or rod-shape of the handlebar bend, the assembly of bicycle handlebar and bicycle bell cooperating therewith is more compact than the known assembly of bicycle handlebar and bicycle bell.

The invention can also be embodied in an assembly according to claim 6, in a bicycle according to claim 7, and in a method according to claim 8.

Specific embodiments of the invention are laid down in the dependent claims.

In the following, the invention is further elucidated with reference to the schematic Figures in the accompanying drawing.
Fig. 1 shows, in perspective, an example of a portion of an embodiment of a bicycle handlebar according to the invention;
Fig. 2 shows, in perspective, a portion of the example of Fig. 1 in a view to a cross section through the bicycle handlebar;
Fig. 3 shows, in perspective, the example of Fig. 1 in another view;
Figs. 4A and 4B show cross sections of an example of a portion of another embodiment of a bicycle handlebar according to the invention;
Figs. 5A and 5B show cross sections of an example of a portion of yet another embodiment of a bicycle handlebar according to the invention.

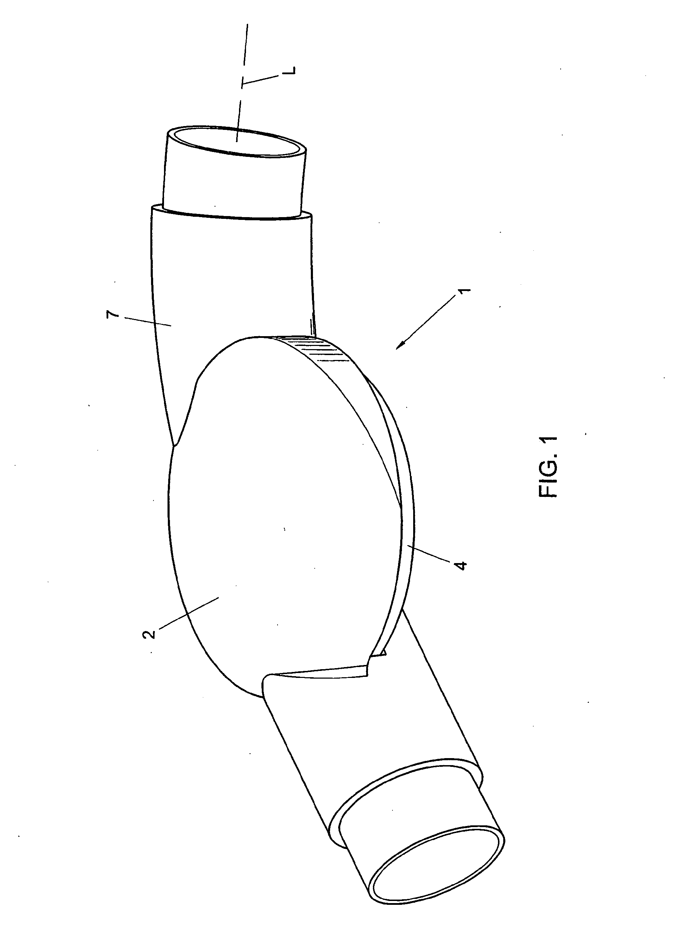

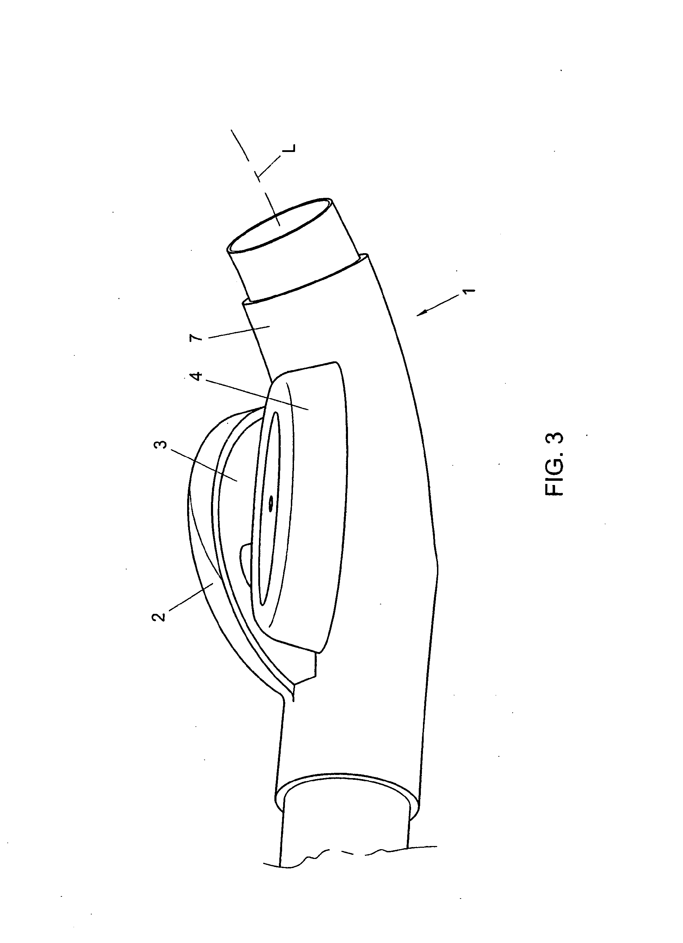

First, reference is made to the example shown in Figs. 1, 2 and 3. Figs. 1 and 3 show, in a longitudinal direction L of handlebar bend of a bicycle handlebar, a longitudinal segment 1 of the handlebar bend. In the example, the handlebar bend is substantially tube-shaped 7, i.e. the handlebar bend is substantially hollow. However, the handlebar bend can also be substantially rod-shaped, i.e. the handle bar is substantially solid. In the longitudinal direction L, the tubular shape 7 may or may not proceed to a greater or lesser extent in a curved manner. Various types of tube-shapes or rod-shapes are possible, i.e. not only tube-shapes or rod-shapes with a circular cross section, but also tube-shapes or rod-shapes with at least partly other cross sections, for instance oval cross sections.

In the example, in the continuation of one longitudinal end of the handlebar bend segment 1, the handlebar bend has a portion (not shown) which, in operation, can be grasped by a cyclist, while a central portion (not shown) of the handlebar bend is in the continuation of the other longitudinal end of the handlebar bend segment 1.

The bicycle handlebar has a bicycle bell receiving element 2 which defines a bicycle bell receiving space 3 for receiving at least a part of a bicycle bell. The bicycle bell receiving element 2 links up with the tube-shape 7 of the handlebar bend, wherein the bicycle bell receiving space 3 interrupts the tubular shape 7 of the handlebar bend at least partly.

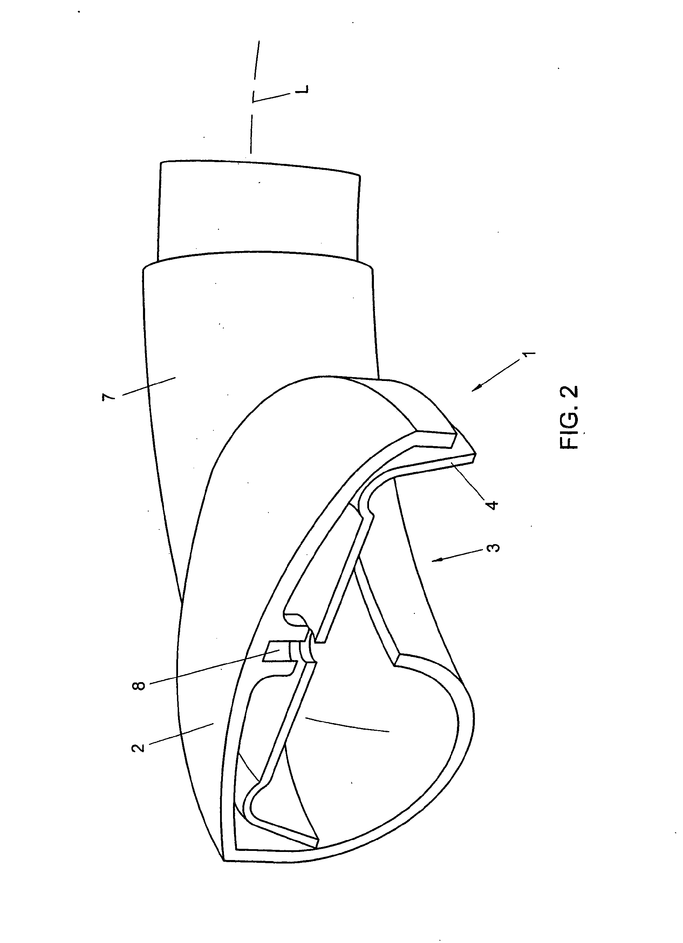

Fig. 2 shows in perspective a portion of the example of Fig. 1 in a view to a cross section through the handlebar bend segment 1. This cross section is taken through a portion of the handlebar bend segment 1 where the bicycle bell receiving element 2 and the bicycle bell receiving space 3 are located.

In the example, Figs. 1 and 2 show that a bell dish 4 of the bicycle bell is received in the bicycle bell receiving space 3. Fig. 3 shows a situation where the bell dish 4 is introduced into or removed from the bicycle bell receiving space 3. On the side proximal to the bicycle bell receiving space 3, the bicycle bell receiving element 2 has a bush 8. By means of this bush 8, for instance with the aid of a bolt and screw thread connection (not shown), the bell dish 4 and/or another part of the bicycle bell can be detachably connected to the bicycle bell receiving element 2. For the sake of clarity, only the bell dish 4 of the bicycle bell is shown. Naturally, other parts of the mechanism of the bicycle bell can also be at least partly received in the bicycle bell receiving space 3.

The handlebar bend segment 1 can be a casting, with the bicycle bell receiving element 2 being a part of the casting, casted integrally therewith. Then, the handlebar bend segment can be fastened by both longitudinal ends to other parts of the handlebar bend or bicycle handlebar, for instance through socket connections, welding, gluing and the like. On one of the two longitudinal ends of the handlebar bend segment 1, a handle may be provided on the handlebar bend segment 1. It is further possible that the handlebar bend as a whole is a casting.

Instead of casting the bicycle bell receiving space integrally with the at least one longitudinal segment of handlebar bend, the bicycle bell receiving element can also be fastened, after separate manufacture thereof, to the tube-shape or rod-shape of the handlebar bend, through, for instance, welding or soldering. If, in that case, the separately manufactured tube-shape or rod-shape of the handlebar is not yet interrupted, this interrupting can take place by removing a portion of the tube-shape or rod-shape.

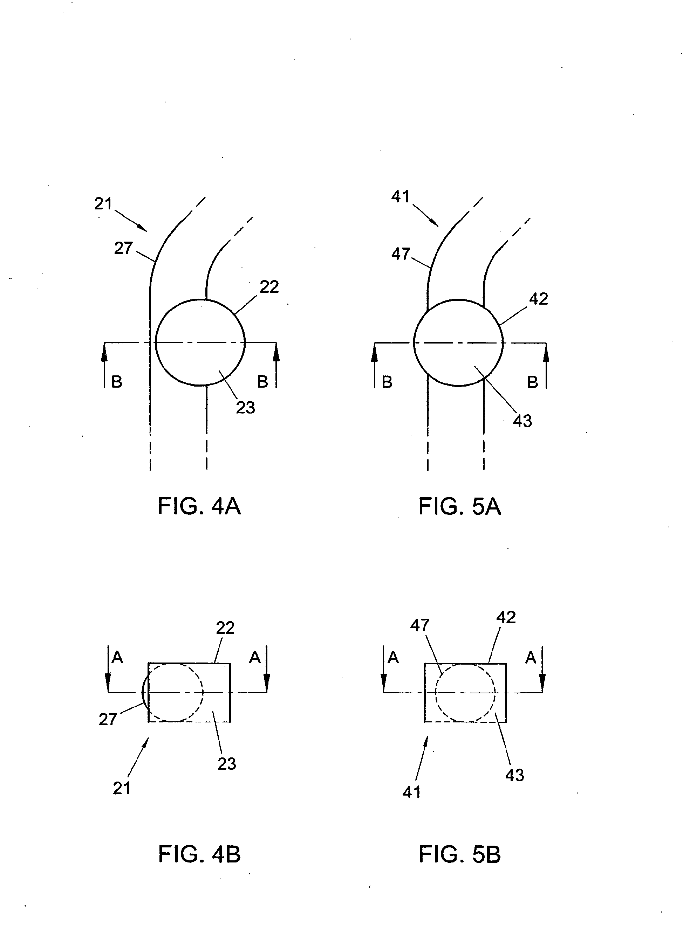

Reference is now made to Figs. 4A and 4B, wherein an example of a portion of another embodiment of a bicycle handlebar according to the invention is shown. What is shown is a handlebar bend segment 21 with a tube-shape 27, and a bicycle bell receiving element 22 which defines a bicycle bell receiving space 23 for receiving at least a part of a bicycle bell. Figs. 4A and 4B show a longitudinal cross section and a cross section, respectively, through the handlebar bend segment 21 and the bicycle bell receiving element 22. The longitudinal cross section of Fig. 4A is taken according to the plane A shown in Fig. 4B, the cross section of Fig. 4B is taken according to the plane B shown in Fig. 4A.

The handlebar bend segment 21 shown has a hollow interior. The bicycle bell receiving element 22 shown has a cylindrical shape formed by a cylinder casing, wherein one end cylinder surface is formed by a wall of the bicycle bell receiving element 22 and the opposite end cylinder surface forms an open entrance side to the bicycle bell receiving space 23. This open entrance side is indicated in Fig. 4B with an interrupted, straight line. Further, in Fig. 4B, with the interrupted, arcuate line, the location is indicated where the tube-shape 27 is interrupted by the bicycle bell receiving space 23.

With the example shown in Figs. 4A and 4B, the cylinder casing of the bicycle bell receiving element 22 screens the hollow interior of the handlebar bend off to prevent pollution of the hollow interior. It is thus prevented that, during use, moisture and dirt affect the bicycle handlebar from within in that moisture and dirt penetrate the hollow interior of the handlebar via the bicycle bell receiving space 23.

Reference is now made to Figs. 5A and 5B, wherein an example of a portion of yet another embodiment of a bicycle handlebar according to the invention is shown. The example of Figs. 5A and 5B is similar to the above-described example of Figs. 4A and 4B, and in Figs. 5A and 5B, the reference numerals of corresponding parts are increased by the number 20 with respect to Figs. 4A and 4B. The difference between the two examples shown is that in the example of Figs. 5A and 5B, the bicycle bell receiving space interrupts the tube-shape of the handlebar bend over a complete cross section of the handlebar bend, while this is not the case in the example of Figs. 4A and 4B.

It is noted that with the two exemplary embodiments of Figs. 4A, 4B, 5A and 5B, at wish, the bicycle bell receiving element can form part of an integral casting or can be provided after separate manufacture, as was described hereinabove on the basis of the example of Figs. 1, 2 and 3. Further, the configurations shown in Figs. 4A, 4B, 5A and 5B can, at wish, be utilized with substantially rod-shaped, i.e. not hollow, handlebars.

It is noted that the above-mentioned examples of embodiments do not delimit the invention and that within the scope of the accompanying claims, various alternatives are possible. Instead of or in addition to one or more closed walls with which the bicycle bell receiving element defines the bicycle bell receiving space, the bicycle bell receiving element can also have one or more walls which are partly open in that they are formed by, for instance, cage or wire structures. The bicycle bell receiving element can further have various forms and, in operative condition, be oriented in various manners relative to the bicycle bell receiving space. For instance, an entrance side for the purpose of inserting a bicycle bell in the bicycle bell receiving space can, in operative condition, be situated below, above or sideways of the bicycle bell receiving element. Such an entrance side can also, if desired, be screened off with a detachable cover which can be provided on the bicycle bell receiving element. The bicycle handlebar can further also be a handlebar of a motorized vehicle, or of a different means of transportation not necessarily provided with wheels, such as, for instance, a means of transportation to be used on ice, through snow or over water. Such and similar alternatives are understood to fall within the framework of the invention as defined in the appended claims.

## Claims

1. A bicycle handlebar, comprising a substantially tube-shaped or rod-shaped (7; 27; 47) handlebar bend which, in longitudinal direction (L), may or may not proceed to a greater or lesser extent in a curved manner,
**characterized by** a bicycle bell receiving element (2; 22; 42) which defines a bicycle bell receiving space (3; 23; 43) for receiving at least a part (4) of a bicycle bell, wherein the bicycle bell receiving element links up with the tube-shape or rod-shape (7; 27; 47) of the handlebar bend such that the bicycle bell receiving space at least partly interrupts the tube-shape or rod-shape of the handlebar bend.

2. A bicycle handlebar according to claim 1, wherein at least one longitudinal segment (1; 21; 41) of the handlebar bend is a casting and the bicycle bell receiving element (2; 22; 42) is an integrally casted part of the casting.

3. A bicycle handlebar according to claim 1, wherein the bicycle bell receiving element (2; 22; 42) is welded or soldered to the tube-shape or rod-shaped (7, 27, 47) of the handlebar end.

4. A bicycle handlebar according to any one of the preceding claims, wherein the handlebar bend has a hollow interior and walls of the bicycle bell receiving element (2; 22; 42) screen the bicycle bell receiving space (3; 23; 43) off from the hollow interior to prevent pollution of the hollow interior.

5. A bicycle handlebar according to any one of the preceding claims, wherein the bicycle bell receiving element (2) is provided with a fastening element (8) for suspending with the aid thereof the bicycle bell from the bicycle bell receiving element (2).

6. An assembly of a bicycle handlebar according to any one of the preceding claims and a bicycle bell cooperating therewith.

7. A bicycle provided with a bicycle handlebar according to any one of claims 1 - 5.

8. A method for manufacturing a bicycle handlebar comprising a substantially tube-shaped or rod-shaped (7; 27; 47) handlebar bend which, in longitudinal direction, may or may not proceed to a greater or lesser extent in a curved manner, **characterized in that** upon manufacture of the handlebar bend, the tube-shape or rod-shape of the handlebar bend is interrupted and that a bicycle bell receiving element (2; 22; 42) linking up with the tube-shape or rod-shape of the handlebar bend is manufactured such that the bicycle bell receiving element defines a bicycle bell receiving space (3; 23; 43) for receiving at least a part (4) of a bicycle bell, and the bicycle bell receiving space extends at least partly in an area where the tube-shape or rod-shape of the handlebar is interrupted.

9. A method according to claim 8, wherein at least one longitudinal segment (1; 21; 41) of the handlebar bend is casted integrally with the bicycle bell receiving element (2; 22; 42).

10. A method according to claim 8, wherein the bicycle bell receiving element (2; 22; 42) is welded or soldered to the interrupted tube-shape or rod-shape (7; 27; 47) of the handlebar bend.

## Patentansprüche

1. Ein Fahrradlenker, der eine im Wesentlichen röhrenförmige oder stabförmige (7; 27; 47) Lenkerkrümmung aufweiset, die sich in der Längsrichtung (L) mehr oder weniger gebogen erstrecken kann oder nicht, **gekennzeichnet durch** ein Fahrradklingelaufnahmeelement (2; 22; 42), das einen Fahrradklingelaufnahmeraum (3; 23; 43) zur Aufnahme zumindest eines Teils (4) einer Fahrradklingel definiert, wobei sich das Fahrradklingelaufnahmeelement sich so an die Röhrenform oder Stabform (7; 27; 47) der Lenkerkrümmung anschließt, dass der Fahrradklingelaufnahmeraum die Röhrenform oder Stabform der Lenkerkrümmung zumindest teilweise unterbricht.

2. Ein Fahrradlenker nach Anspruch 1, wobei zumindest ein Längssegment (1; 21; 41) der Lenkerkrümmung ein Gussstück ist und das Fahrradklingelaufnahmeelement (2; 22; 42) ein einstückig gegossenes Teil des Gusstücks ist.

3. Ein Fahrradlenker nach Anspruch 1, wobei das Fahrradklingelaufnahmeelement (2; 22; 42) an die Röhrenform oder Stabform (7; 27; 47) der Lenkerkrümmung angeschweißt oder angelötet ist.

4. Ein Fahrradlenker nach irgendeinem der vorhergehenden Ansprüche, wobei die Lenkerkrümmung ein hohles Inneres aufweist, und Wandungen des Fahrradklingelaufnahmeelements (2; 22; 42) den Fahrradklingelaufnahmeraum (3; 23; 43) vom hohlen Inneren abschirmen, um eine Verunreinigung des hohlen Inneren zu verhindern.

5. Ein Fahrradlenker nach irgendeinem der vorangehenden Ansprüche, wobei das Fahrradklingelaufnahmeelement (2) mit einem Befestigungselement (8) versehen ist, um mit Hilfe dessen die Fahrradklingel an dem Fahrradklingelaufnahmeelement (2) aufzuhängen.

6. Eine Baugruppe eines Fahrradlenkers nach irgendeinem der vorangehenden Ansprüche und eine damit zusammenwirkende Fahrradklingel.

7. Ein Fahrrad, das mit einem Fahrradlenker nach irgendeinem der Ansprüche 1 - 5 versehen ist.

8. Ein Verfahren zur Herstellung eines Fahrradlenkers, der eine im Wesentlichen röhrenförmige oder stabförmige (7; 27; 47) Lenkerkrümmung aufweist, die sich in der Längsrichtung mehr oder weniger gebogen erstrecken kann oder nicht, **gekennzeichnet dadurch, dass** bei der Herstellung der Lenkerkrümmung die Röhrenform oder Stabform der Lenkerkrümmung unterbrochen ist und dass ein Fahrradklingelaufnahmeelement (2; 22; 42), das sich an die Röhrenform oder Stabform der Lenkerkrümmung anschließt, so hergestellt wird, dass das Fahrradklingelaufnahmeelement einen Fahrradklingelaufnahmeraum (3; 23; 43) zur Aufnahme zumindest eines Teils (4) einer Fahrradklingel definiert, und der Fahrradklingelaufnahmeraum sich zumindest teilweise in einem Bereich erstreckt, in dem die Röhrenform oder Stabform der Lenkerkrümmung unterbrochen ist.

9. Ein Verfahren nach Anspruch 8, wobei zumindest ein Längssegment (1; 21; 41) der Lenkerkrümmung einstückig mit dem Fahrradklingelaufnahmeelement (2; 22; 42) gegossen wird.

10. Ein Verfahren nach Anspruch 8, wobei das Fahrradklingelaufnahmeelement (2; 22; 42) an die unterbrochene Röhrenform oder Stabform (7; 27; 47) der Lenkerkrümmung angeschweißt oder angelötet wird.

## Revendications

1. Guidon de bicyclette, comprenant un coude de guidon (7 ; 27 ; 47) globalement en forme de tube ou en forme de tige qui, dans une direction longitudinale (L), peut s'étendre ou non dans une mesure plus importante ou moins importante d'une manière courbée,
**caractérisé par** un élément de réception de sonnette de bicyclette (2 ; 22 ; 42) qui définit un espace de réception de sonnette de bicyclette (3 ; 23 ; 43) destiné à recevoir au moins une partie (4) d'une sonnette de bicyclette, dans lequel l'élément de réception de sonnette de bicyclette établit une liaison avec la forme de tube ou la forme de tige (7 ; 27 ; 47) du coude de guidon de sorte que l'espace de réception de sonnette de bicyclette interrompe au moins partiellement la forme de tube ou la forme de tige du coude de guidon.

2. Guidon de bicyclette selon la revendication 1, dans lequel au moins un segment longitudinal (1 ; 21 ; 41) du coude de guidon est une pièce moulée, et l'élément de réception de sonnette de bicyclette (2 ; 22 ; 42) est une partie moulée de manière solidaire de la pièce moulée.

3. Guidon de bicyclette selon la revendication 1, dans lequel l'élément de réception de sonnette de bicyclette (2 ; 22 ; 42) est soudé ou brasé à la forme de tube ou à la forme de tige (7 ; 27 ; 47) du coude de guidon.

4. Guidon de bicyclette selon l'une quelconque des revendications précédentes, dans lequel le coude de guidon a un intérieur creux, et des parois de l'élément de réception de sonnette de bicyclette (2 ; 22 ; 42) forment un écran isolant l'espace de réception de sonnette de bicyclette (3 ; 23 ; 43) de l'intérieur creux afin d'éviter la pollution de l'intérieur creux.

5. Guidon de bicyclette selon l'une quelconque des revendications précédentes, dans lequel l'élément de réception de sonnette de bicyclette (2) est doté d'un élément de fixation (8) destiné à suspendre, grâce à celui-ci, la sonnette de bicyclette depuis l'élément de réception de sonnette de bicyclette (2).

6. Assemblage constitué d'un guidon de bicyclette selon l'une quelconque des revendications précédentes, et d'une sonnette de bicyclette coopérant avec celui-ci.

7. Bicyclette équipée d'un guidon de bicyclette selon l'une quelconque des revendications 1 à 5.

8. Procédé de fabrication d'un guidon de bicyclette, comprenant un coude de guidon (7 ; 27 ; 47) globalement en forme de tube ou en forme de tige qui, dans une direction longitudinale, peut s'étendre ou non dans une mesure plus importante ou moins importante d'une manière courbée, **caractérisé en qu'**au moment de la fabrication du coude de guidon, la forme de tube ou la forme de tige du coude de guidon est interrompue, et ce qu'un élément de réception de sonnette de bicyclette (2 ; 22 ; 42) établissant une liaison avec la forme de tube ou la forme de tige du coude de guidon est fabriqué de sorte que l'élément de réception de sonnette de bicyclette définisse un espace de réception de sonnette de bicyclette (3 ; 23 ; 43) destiné à recevoir au moins une partie (4) d'une sonnette de bicyclette, et de sorte que l'espace de réception de sonnette de bicyclette s'étende au moins partiellement dans une zone où la forme de tube ou la forme de tige du coude de guidon est interrompue.

9. Procédé selon la revendication 8, dans lequel au moins un segment longitudinal (1 ; 21 ; 41) du coude de guidon est moulé de manière solidaire avec l'élément de réception de sonnette de bicyclette (2 ; 22 ; 42).

10. Procédé selon la revendication 8, dans lequel l'élément de réception de sonnette de bicyclette (2 ; 22 ; 42) est soudé ou brasé à la forme de tube ou à la forme de tige (7 ; 27 ; 47) interrompue du coude de guidon.
